Europäisches Patentamt

European Patent Office

Office européen des brevets

(11) Publication number: **0 351 022**
**A1**

# EUROPEAN PATENT APPLICATION

(21) Application number: **89201847.4**

(22) Date of filing: **12.07.89**

(51) Int. Cl.⁴: **B65B 23/06 , B65G 15/50 , A01K 43/00**

(30) Priority: **13.07.88 NL 8801779**

(43) Date of publication of application:
**17.01.90 Bulletin 90/03**

(84) Designated Contracting States:
**DE FR GB IT NL**

(71) Applicant: **TERPA POULTRY B.V.**
**Prof. E.M. Meijerslaan 1**
**NL-1183 AV Amstelveen(NL)**

(72) Inventor: **van Veldhuisen, Willem**
**Veenweg 26**
**NL-6741 EB Lunteren(NL)**

(74) Representative: **Smulders, Theodorus A.H.J.,**
**Ir. et al**
**Vereenigde Octrooibureaux Nieuwe Parklaan**
**107**
**NL-2587 BP 's-Gravenhage(NL)**

(54) **Apparatus for catching, and laterally removing, vertically supplied vulnerable products, such as eggs.**

㊼ An apparatus for catching, and laterally removing, vertically supplied eggs, comprising elastic catching means, consisting of at least two slightly interspaced, parallel catching wires (13, 14) as well as supporting wires (12, 15) arranged above, and spaced a larger distance apart than, the catching wires. Downstream of the catching and transporting wires or belts, a second transporting section can link up therewith at a smaller speed than the first mentioned transporting wires or belts. The supporting wires - as viewed in downstream direction - may be arranged from the egg feeding location at an increasingly smaller distance from the catching wires.

FIG 4

## Apparatus for catching, and laterally removing, vertically supplied vulnerable products, such as eggs

This invention relates to an apparatus for catching, and laterally removing, vertically supplied vulnerable products, such as eggs, provided with elastic catching means.

An apparatus of this type is known from USP 4,569,444, wherein the catching means comprise a pair of adjacent brushes whose bristles are fabricated in such a manner that the vulnerable product is caught resiliently.

This known apparatus has the drawback that when eggs are handled by it, and an egg breaks, the bristles are severely fouled with the egg contents and subsequently they are very difficult to clean, thus considerably increasing the chance of cumulation of broken eggs. Moreover, a proper catching operation requires comparatively long brush bristles, resulting likewise in a comparatively tall construction of the apparatus.

It is an object of the present invention to remove these drawbacks.

To that effect, an apparatus of the above described type is characterized in that the catching means consist of a plurality of substantially parallel, juxtaposed elastic wires or belts having a free bending length. Such wires or belts can be cleaned far more easily than the brushes used in the known apparatus.

In a further elaboration of the present invention, the catching means may comprise at least two slightly interspaced, parallel catching wires adapted to catch the falling egg elastically. Supporting wires arranged above, and spaced a larger distance apart than, the catching wires ensure an effective further support of the falling egg.

Downstream of the catching and transporting wires or belts, a second transport section may link up therewith, operating at a lower speed than the first mentioned transporting wires or belts. The second transporting wires may then link up with one or more further transporting wires each operating at a lower speed - as viewed in downstream direction - than the preceding transporting wires. As a result, the speed of the eggs or like vulnerable products can be reduced considerably, so that, at the end of the transporting wires or belts, the eggs have a speed approaching zero, at which they can be easily removed for packing purposes or the like.

Since the eggs, after having been caught by the catching wires, together with the supporting wires, will tilt under the influence of the speed of movement of the wires, in such a manner that they come to lie with their longitudinal axes parallel to the wires, the supporting wires - in downstream direction from the egg supply location - can be arranged at an increasingly smaller distance from the catching wires.

These supporting, catching and/or transporting wires or belts can be guided by return rollers, always one of each pair being drivable.

In a further elaboration of the present invention - as viewed in downstream direction - there may be arranged a transfer roller between the return rollers of the first and the second transporting wires or belts, at such a level that a transfer of the eggs at that exact location is ensured. To promote the catching of the eggs and their rotation with the tips in the direction of transport, a rotatably mounted catching plate may be arranged laterally of the egg supply location. For a proper guidance of the supporting wires, a supporting roller for supporting the supporting wires may be arranged - as viewed in downstream direction - beside the first return roller but ahead of the egg supply location and at a higher level than the return roller. To ensure that the transporting or catching wires between the return rollers will not sag too much, supporting plates may be arranged underneath said wires, which plates are provided with one or more recesses for supporting said wires.

For the purpose of further controlling the speed of the eggs or like vulnerable products, the supporting plate that is the last as viewed in downstream direction and the transporting wire guided by said supporting plate may be fabricated and mutually arranged in such a manner that the wire - as viewed in the direction of transport - descends to below the level of the supporting plate in such a manner that a transported egg - as viewed in downstream direction - is no longer supported and transported by the transporting wire at a given distance before the end of the supporting plate, but is supported exclusively by the supporting plate.

By arranging this supporting wire asymmetrically relatively to the supporting plate, a rotation of the egg can take place from the longitudinal into the lateral direction, with the tip pointing to one given side thus facilitating the catching of the egg.

Juxtaposed return rollers can be interconnected through a shaft and always one of each pair of associated return rollers is drivable.

In a still further elaboration of the present invention, a gating device or dropset can be arranged - as viewed in the direction of transport - ahead of the catching means.

Some embodiments of the packing apparatus according to the present invention will now be described, by way of example, with reference to the accompanying drawings, in which:

Fig. 1 is a diagrammatic top view of a packing apparatus according to the present invention;

Fig. 2 is a diagrammatic cross-sectional view on the line II-II of Fig. 1;

Fig. 3 is a top view of the apparatus shown in Fig. 2;

Fig. 4 is a cross-sectional view on the line IV-IV of Fig. 2;

Fig. 5 is a cross-sectional view on the line V-V of Fig. 3;

Fig. 6 is a cross-sectional view on the line VI-VI of Fig. 3;

Fig 7 is a cross-sectional view according to Fig. 4 of another embodiment of the apparatus according to the present invention; and

Fig. 8 is an elevational view according to Fig. 7 of a still further embodiment of the apparatus according to the present invention.

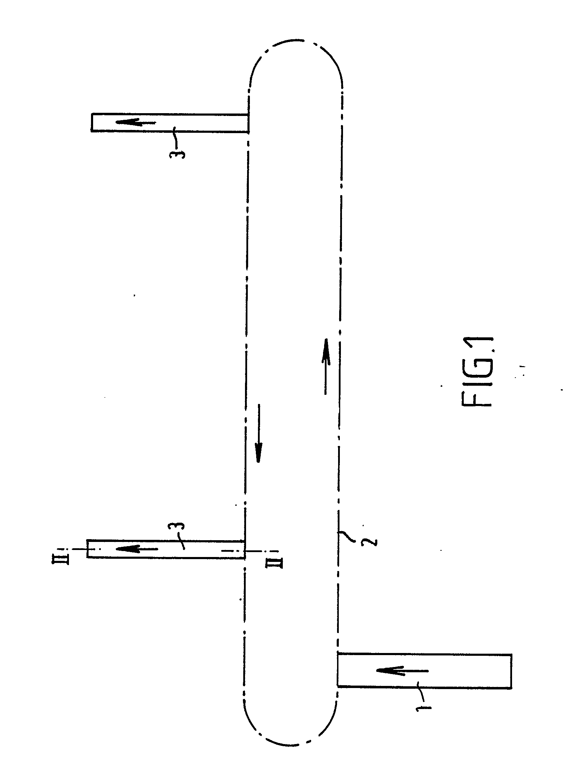

As shown in Fig. 1, a packing apparatus is provided with a feeding device 1 for graded eggs. This feeding device may have all kinds of forms, viz. a belt, a chain or the like for feeding graded eggs, i.e. eggs that have been pre-candled and from which likewise the extraordinary eggs, i.e. very small eggs, for instance pigeon eggs, and the very large ones, e.g. double yolks, have been removed. The eggs are then transferred to a circular transporting track 2, by means of which the eggs are separately advanced and meanwhile graded. Downstream of the grading section (the direction of advance of belt 2 is indicated with arrows), a plurality of packing tracks 3 link up laterally with transporting track 2, each track 3 being suitable for a given grade of eggs.

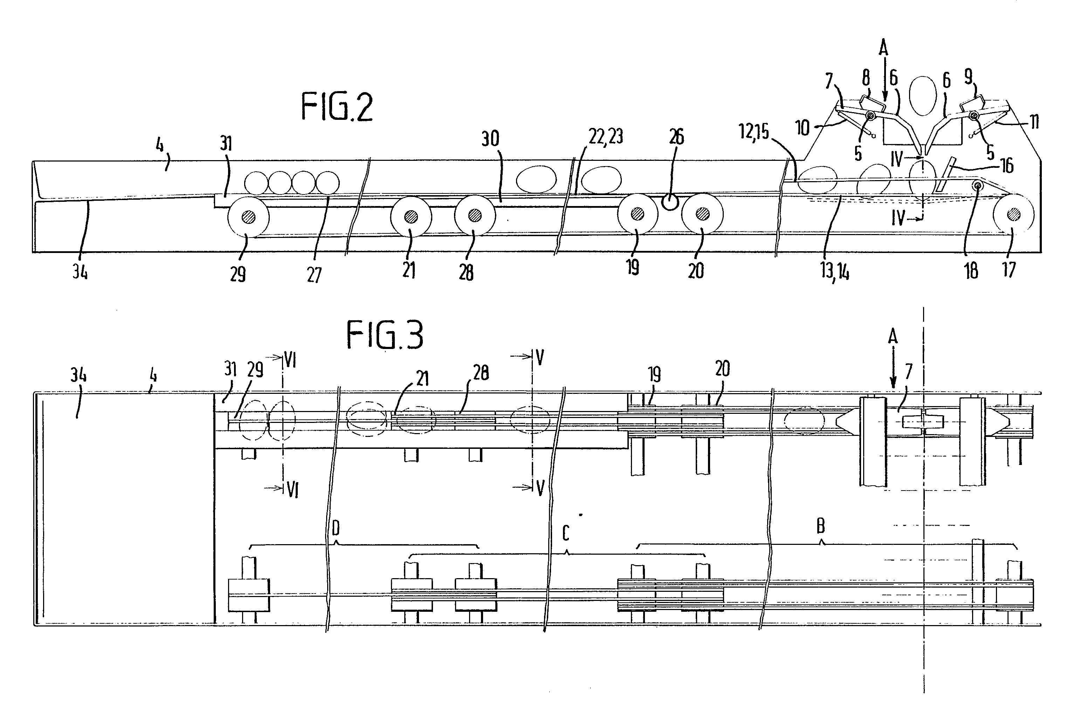

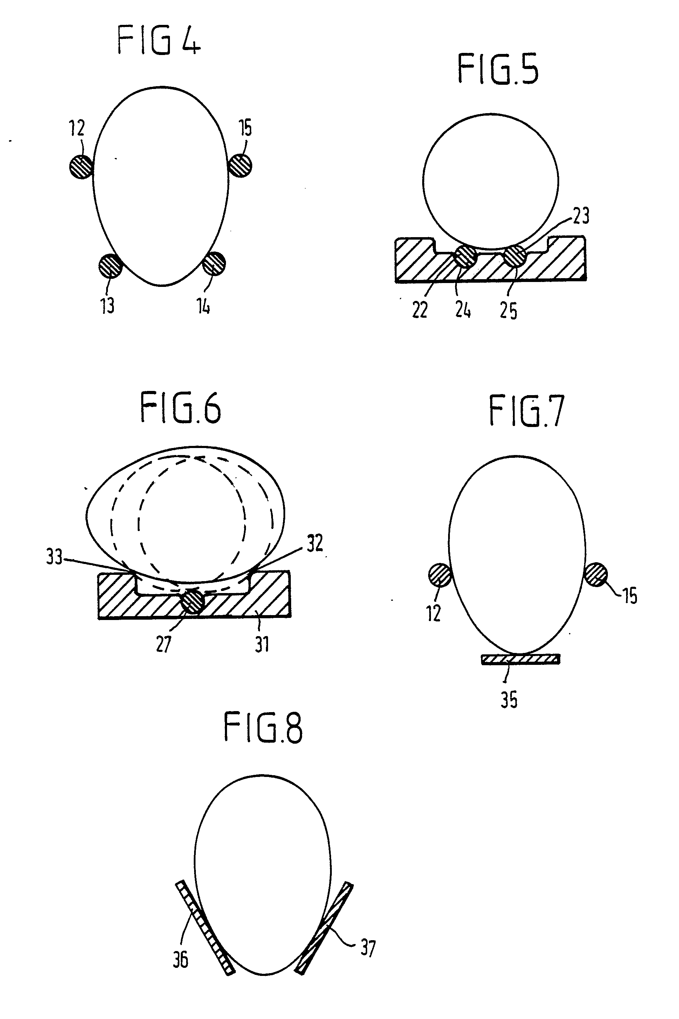

As shown in Figs. 2 and 3, each packing track essentially consists of a gating device (also called dropset) A with a subjacent catching-transporting section B with which transporting sections C and D link up in cascade arrangement (in the embodiment shown, these concern accordingly three transporting sections linking up with each other, i.e. B, C and D, but this may naturally also be a different number). Transporting sections B, C and D always advance at a lower speed, so that the speed of the supplied eggs or vulnerable products is reduced stepwise.

The gating device or dropset A essentially comprises shafts 5 arranged between frame plates 4, each of said shafts mounting a plurality (depending upon the number of tracks desired) of fingers 6, each being extended rearwardly with a tail piece 7. The movement of each finger is defined by bridges 8, 9 provided between the frame plates. The fingers are under the influence of springs 10, 11, arranged between the free end of a tail piece 7 and a fixed point on frame plates 4. Springs 10, 11 are constructed in such a manner that they move fingers 6 to the closing position with little force. As soon as an egg or other vulnerable product is present between all juxtaposed fingers 6, the force of springs 10, 11 will be exceeded and the eggs or other vulnerable products will be dropped. For further particulars regarding dropsets, reference is made to US patents 3,535,195, 3,528,572 and 4,261,158, which are incorporated herein by reference.

The fingers 6 are constructed in such a manner that eggs supplied therewith, with their axes oriented properly vertically (in the following, there will exclusively be a question of eggs, but the apparatus is not restricted thereto) will be dropped vertically to the subjacent catching-transporting section B.

The catching-transporting section of each row consists of four strings or wires 12, 13, 14 and 15 (see Fig. 4). These wires or strings should be elastic. In the embodiment shown, use is made of synthetic plastics wires which are marketed under the trade name "Polycord", having a diameter of about 5 mm. The wires coact mutually, i.e. wires 13 and 14 are so interspaced that they catch an egg, so that these wires are also called catching wires. Wires 12 and 15 subsequently cooperate, because these ensure that the eggs remain in upright position at the moment they are caught: they are therefore also called supporting wires. Because the eggs supplied with their axes oriented vertically are caught by horizontally advancing wires, the eggs, when contacting the wires, will be immediately tilted with their longitudinal axes in the direction of transport. To ensure that the eggs are correctly caught, and arrive with their tips in the direction of transport, a spring-mounted catching plate 16 can be arranged for each track at the passage opening of fingers 6.

As shown in Fig. 2, the supporting wires extend from a return roller 17 over a freely rotatable auxiliary roller 18 and subsequently obliquely downwards to a return roller 19.

At some distance before return roller 19, there is provided a return roller 20 coacting with a return roller 21 and over which two transporting wires 22, 23 (see Fig. 5) are conducted. The major portion of transporting wires 22, 23 between rollers 20 and 21 is supported by a supporting plate 30, which is provided for the purpose with recesses 24, 25, corresponding with the diameter of the transporting wires. As shown in Fig. 2, there is arranged between return rollers 19 and 20 a transfer roller 26 (not shown in Fig. 3 for the sake of clearness), which ensures that the transfer of the advancing egg from the catching wires 13, 14 takes place by transporting wires 22, 23 at a fixed point and not at a varying point, which could readily produce impacts between preceding and following eggs. It is observed in this connection that the transfer roller is arranged in such a manner that the transporting wires 22, 23 moving over it are always located at least at the same level as at the location of return roller 20 and likewise at the same level as catching wires 13, 14 at the location of the guide on return roller 19.

The transporting section C links up with transporting section D advancing at a lower speed, i.e. during the movement over transporting section D, the speed of the eggs is reduced entirely to zero. To that end, transporting section D is fitted with one transporting wire 27 (Fig. 6), which runs on return rollers 28, 29. As shown in Figs. 2, 3 and 6, a supporting plate 31 is provided underneath transporting wire 27, i.e. from return roller 21 to beyond return roller 29. Supporting plate 31 is constructed and arranged relatively to transporting wire 27 in such a manner that transporting wire 27 moves increasingly further downwards relatively to supporting edges 32, 33. This implies that - as viewed in downstream direction - an egg oriented with its longitudinal axis in the direction of transport, is first transported by transporting wire 27, but at a given moment, the egg will rest exclusively on the transporting wire and one of the two edges 32, 33 (shown in Fig. 6 by dotted lines), so that the egg will gradually rotate and eventually reach the position shown in Fig. 6 by full lines, thereby resting exclusively on edges 32, 33. In this position, the speed of transport of each egg will be reduced to zero. Accordingly, a buffering effect will occur in this last section. From this location, the eggs can be removed either manually, or mechanically and be packed in trays or the like disposed on a packing table linking up with the transporting section D.

As further shown in the drawings, the rollers arranged in juxtaposed relationship, transversely to the direction of transport, are mounted on a single shaft, which are all shown in Fig. 2 in hatched fashion but are not provided with reference numerals. These shafts may be extended in known per se manner to beyond the frame plates 4 and be provided at that location with a drive mechanism, which is likewise known per se and accordingly not shown.

As shown in the drawings, in particular Fig. 2, catching wires 13, 14 will sag when an egg falls on said wires, so that the egg is caught elastically, thereby minimizing the chance of damage. This catching position of the catching wires is shown in Fig. 2 by dotted lines.

Instead of the situation with catching and supporting wires shown in Figs. 2 and 4, use can also be made of a construction as shown diagrammatically in Fig. 7, wherein the catching wires 13, 14 are replaced by a single elastic, rotating belt 35, while supporting wires 12, 15 are maintained. The construction according to this embodiment allows to achieve the same effect as with the above described construction.

This also applies to the construction shown Fig. 8, wherein the catching and supporting wires 12, 13, 14, 15 are replaced by two angularly arranged elastic, rotating belts 36, 37. The operation of these belts will be apparent in view of the above and need no further explanation.

## Claims

1. An apparatus for catching, and laterally removing, vertically supplied eggs, comprising elastic catching means, characterized in that the catching means comprise a plurality of substantially parallel, juxtaposed elastic wires or belts having a free bending length.

2. An apparatus as claimed in claim 1, characterized in that the catching device consists of at least two slightly interspaced, parallel catching wires.

3. An apparatus as claimed in claim 2, characterized by supporting wires arranged above, and spaced a larger distance apart than, the catching wires.

4. An apparatus as claimed in claim 1, 2 or 3, characterized in that, downstream of the catching and transporting wires or belts, a second transporting section links up therewith at a smaller speed than the first mentioned transporting wires or belts.

5. An apparatus as claimed in claim 4, characterized in that the second transporting wires link up with one or more further transporting wires at a lower speed - as viewed in downstream direction - than the preceding transporting wires.

6. An apparatus as claimed in any of the preceding claims, characterized in that the supporting wires - as viewed in downstream direction of the egg feeding location - are arranged at an increasingly smaller distance from the catching wires.

7. An apparatus as claimed in any of the preceding claims, characterized in that the supporting, catching and/or transporting wires or belts are guided by return rollers, always one of each pair being driven.

8. An apparatus as claimed in claims 4, 5, 6 or 7, characterized in that - as viewed in downstream direction -there is arranged between the return rollers of the first and the second transporting wires or belts, a transfer roller at such a level that a transfer of the eggs at this exact location is ensured.

9. An apparatus as claimed in any of the preceding claims, characterized in that a rotatably mounted catching plate is arranged laterally of the egg feeding location.

10. An apparatus as claimed in any of the preceding claims, characterized in that - as viewed in downstream direction - a supporting roller for supporting the supporting wires is arranged beside the first return roller but ahead of the egg feeding location and at a higher level than the return roller.

11. An apparatus as claimed in any of the preceding claims, characterized in that provided underneath the transporting wires are supporting plates having one or more recesses for supporting the transporting wire or wires.

12. An apparatus as claimed in any of the preceding claims, characterized in that the supporting plate that is the last as viewed in downstream direction, and the transporting wire guided by it are constructed and mutually arranged in such a manner that the wire - as viewed in the direction of transport - descends to below the level of the supporting plate in such a manner that a transported egg - as viewed in downstream direction - is no longer supported and transported by the transporting wire at a given distance ahead of the end of the supporting plate, but is supported exclusively by the supporting plate.

13. An apparatus as claimed in claim 12, characterized in that the supporting wire is arranged asymmetrically relatively to the supporting plate so that a rotation of the egg takes place from the longitudinal into the lateral direction, with the tip being oriented to one given side.

14. An apparatus as claimed in any of the preceding claims, characterized in that juxtaposed return rollers are interconnected through a shaft and always one of each pair of return rollers is driven.

15. An apparatus as claimed in any of the preceding claims, characterized in that - as viewed in the direction of transport - a gating device or dropset is arranged ahead of the catching means.

FIG.1

# FIG.2

# FIG.3

EP 0 351 022 A1

FIG 4

FIG.5

FIG.6

FIG.7

FIG.8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 635 328 (H. BURKHOLDER) <br> * Column 2, lines 13-71; figures * | 1 | B 65 B 23/06 <br> B 65 G 15/50 <br> A 01 K 43/00 |
| Y | | 2-3,15 | |
| Y | EP-A-0 111 953 (THOMASSEN & DRIJVER) <br> * Page 5, lines 18-26; figure 4 * | 2 | |
| Y | EP-A-0 163 330 (THOMASSEN & DRIJVER) <br> * Page 2, line 14 - page 3, line 28; figures 1-3 * | 3 | |
| A | | 4-5 | |
| Y | FR-A-1 565 908 (MOBA) <br> * Page 5, line 21 - page 6, line 17; figures * | 15 | |

TECHNICAL FIELDS
SEARCHED (Int. Cl.5)

B 65 B
B 65 G
A 01 K

The present search report has been drawn up for all claims

| Place of search | Date of completion of the search | Examiner |
|---|---|---|
| THE HAGUE | 18-10-1989 | JAGUSIAK A.H.G. |